# EUROPÄISCHE PATENTSCHRIFT

(11) **EP 4 280 233 B1**
(45) Veröffentlichungstag und Bekanntmachung des Hinweises auf die Patenterteilung: **12.02.2025**
(21) Anmeldenummer: 23172037.6
(22) Anmeldetag: 08.05.2023
(51) Int. Cl.: H01F 7/18, F16K 31/06

(54) **VENTILSYSTEM**
VALVE SYSTEM
SYSTÈME DE SOUPAPE

(30) Priorität: 16.05.2022 DE 102022204764
(43) Veröffentlichungstag der Anmeldung: 22.11.2023
(73) Patentinhaber: Robert Bosch GmbH, 70442 Stuttgart (DE)
(72) Erfinder: Trachte, Adrian, 70563 Stuttgart (DE); Bitzer, Matthias, 70569 Stuttgart (DE)

(56) Entgegenhaltungen:
- CA-A1- 2 851 869
- KR-A- 20190 094 922
- US-A- 5 917 692
- US-A1- 2021 364 099

## Beschreibung

Die vorliegende Erfindung betrifft ein Ventilsystem gemäß dem Oberbegriff des Patentanspruchs 1, insbesondere mit zumindest einer Steuer- und / oder Regelvorrichtung und zumindest einem elektrisch ansteuerbaren Wegeventil mit einem Stellglied. Das Stellglied ist mittels zumindest einer Feder in einer Konstruktionslage, vorzugsweise in einer Mittelstellung gehalten und das Stellglied ist mittels in gegensinniger Richtung auf das Stellglied wirkender erster und zweiter Magnetspulen durch die Steuer- und / oder Regelvorrichtung verstellbar.

### Hintergrund der Erfindung

Bei Ventilsystemen der vorstehend genannten Bauart dient eine Stromsteuerung / - regelung zur Einstellung der Magnetkraft der beiden Magnetspulen, die verwendet werden, um das Stellglied zu verstellen. Zur Stromsteuerung / -regelung wird sowohl der durch die erste wie auch der durch die zweite Magnetspule fließende Strom mittels jeweils einer Strommessvorrichtung gemessen. Es werden also zwei Strommessvorrichtungen mit einem entsprechend hohen apparativen Aufwand verwendet, um die beiden Magnetspulen und somit die Position des Stellgliedes zu steuern und / oder zu regeln.

### Stand der Technik

Aus der US 4 960 365 ist es bekannt, die Magnetspule eines Ventils unter Verwendung eines sogenannten Dithers anzusteuern. Dabei wird eine Effektiv-Strom-Stellgröße mit einer periodischen Dither-Strom-Stellgröße überlagert. Die Effektiv-Strom-Stellgröße repräsentiert dabei die eigentlich vom Benutzer des Ventils gewünschte Stellung des Stellgliedes. Die Dither-Strom-Stellgröße dient dazu, das Stellglied ständig in Bewegung zu halten, so dass zwischen Stellglied und umgebendem Gehäuse immer ein Schmierfilm erhalten bleibt, wobei keine Haftreibung stattfindet, welche das Regelverhalten des Ventils nachteilig beeinflussen würde.

Die US 4 960 365 zeigt aber nur eine einzige Magnetspule zur Verstellung des Stellgliedes, welches dadurch weniger präzise positionierbar ist als mit zwei in gegensinniger Richtung auf das Stellglied wirkender Magnetspulen.

In der DE 10 2019 204 246 A1 ist ein Vorsteuergerät mit einem zugeordneten Wegeventil offenbart. Das Vorsteuergerät umfasst ein Gehäuse, welches aus einem Grundkörper und einem Deckel zusammengesetzt ist. Das Wegeventil hat einen Steuerschieber, welcher bezüglich der Längsachse linearbeweglich ist. Der Steuerschieber ist mit einer Rückstellfeder ausgestattet, welche den Steuerschieber in eine mittlere Stellung vorspannt, wobei sie in den Grundkörper des Vorsteuergeräts hineinragt. Die Stellung des Steuerschiebers wird mittels des Vorsteuergeräts hydraulisch verstellt, wobei das Vorsteuergerät hierfür zwei Steueranschlüsse aufweist. Die entsprechenden Drücke beaufschlagen den Steuerschieber stirnseitig von gegenüberliegenden Seiten her. In dem Grundkörper ist ein Vorsteuerventil aufgenommen, welches in Form eines Cartridge-Ventils ausgebildet ist. Das Vorsteuerventil umfasst eine elektrische Betätigungsvorrichtung. Die Betätigungsvorrichtung umfasst wenigstens eine Betätigungsspule, durch deren Magnetkraft das Vorsteuerventil verstellbar ist. Das Vorsteuerventil ist in Form eines 4/3-Wegeventils ausgebildet, weshalb man auch von einer volumetrischen Ansteuerung spricht. Weiter ist ein Wegsensor vorgesehen, der induktiv arbeitet. Der Wegsensor umfasst einen stabartigen Weicheisenkern, der fest mit dem Steuerschieber verbunden ist. Eine Platine ist Bestandteil einer elektronischen Regelvorrichtung, deren Sollwert bereitgestellt wird, und deren Ist-Wert vom Wegsensor ermittelt wird, wobei deren Stellgröße die Einstellung des Vorsteuerventils ist. Die Regelvorrichtung ist als stetiger linearer Regler, insbesondere als PI-Regler ausgeführt. Der lineare Regler ist unter Verwendung eines Digitalrechners oder einer analogen Schaltung implementiert.

Die EP 2 740 980 B1 zeigt ein weiteres Vorsteuerventil in Form eines Cartridge-Ventils, welches hier als Einbauventil bezeichnet ist. Ein Stellglied des Einbauventils ist mittels zweier Federn in einer in einer Mittelstellung gehalten. Das Stellglied ist weiterhin mittels zweier Magnetspulen verstellbar. Weitere Ventilsystemen sind aus US 5 917 692 A oder KR 2010094922 A bekannt.

### Kurzbeschreibung der Erfindung

Der vorliegenden Erfindung liegt die Aufgabe zugrunde, ein Ventilsystem bereitzustellen, welches die Probleme des Stands der Technik reduziert oder beseitigt. Insbesondere soll die Steuerung und / oder Regelung des Ventilsystems verbessert bzw. vereinfacht und der apparative Aufwand der dazu notwendigen Strommessung der durch die beiden Magnetspulen fließenden Ströme verringert werden.

Diese Aufgabe wird durch ein Ventilsystem gemäß Anspruch 1 gelöst.

Weitere vorteilhafte Ausführungsformen sind Gegenstand der Unteransprüche.

Genauer wird die Aufgabe gelöst durch eine einzige Strommessvorrichtung, die dafür vorgesehen und ausgebildet ist, einen durch die beiden Magnetspulen fließenden Summenstrom zu messen. Gemäß einem weiteren Aspekt der Erfindung ist die Steuer- und/oder Regelvorrichtung dafür vorgesehen und ausgebildet, aus dem gemessenen Summenstrom einen durch die erste Magnetspule fließenden Strom und / oder einen durch die zweite Magnetspule fließenden Strom zu berechnen.

Durch die Verwendung einer einzigen Strommessvorrichtung ist der apparative Aufwand für die Strommessung minimiert. Weiterhin ist trotz der Berechnungen der Ströme eine genaue Bestimmung der aktuell jeweils durch die beiden Magnetspulen fließenden Ströme möglich.

Weiter bevorzugt sind beide Magnetspulen mittels der Steuer- und / oder Regelvorrichtung gleichzeitig bestrombar, um das Stellglied in einem Bereich angrenzend zur Konstruktionslage, vorzugsweise zur Mittelstellung zu verstellen oder in einer bestimmten Position in diesem Bereich zu halten.

Wenn keine der beiden Magnetspulen bestromt wird, befindet sich das Stellglied insbesondere aufgrund der von der Feder auf das Stellglied wirkenden Kraft eben in dieser Konstruktionslage, vorzugsweise in der Mittelstellung. Mit Mittelstellung ist gemeint, dass ausgehend von dieser Mittelstellung in beide Richtungen eine gleich große Verstellung des Stellgliedes möglich ist. Denkbar ist demgegenüber auch, dass ausgehend von der Konstruktionslage in beide Richtungen unterschiedlich große Verstellungen des Stellgliedes möglich sind. Durch die gleichzeitige Bestromung der beiden Magnetspulen in einem Bereich angrenzend zur Konstruktionslage ist eine besonders gleichmäßige Bewegung des Stellgliedes über diese Konstruktionslage hinweg erreichbar, da auf diese Weise Kraftstöße von den Magnetspulen auf das Stellglied erfolgreich vermieden werden können.

In einer bevorzugten Ausführungsform des Ventilsystems weist die Strommessvorrichtung zur Messung des Summenstroms einen Shunt-Widerstand auf. Vorzugsweise hat die Strommessvorrichtung einen einzigen Shut-Widerstand. Vorzugsweise wird anhand des Vorzeichens einer Stellgröße des unten erläuterten PI- bzw. PID-Reglers entschieden, welcher der beiden Magnetspulen bestromt wird, wobei die Strommessung für diese Magnetspule durchgeführt. Vorzugsweise wird der Strom in der anderen Magnetspule zu Null bestimmt, soweit die Entfernung des Stellglieds von der Mittelstellung einen vorgegebenen Grenzwert überschreitet. Vorzugsweise wird im Rahmen der Messung des Summenstroms eine elektrische Spannung am Shunt-Widerstand gemessen.

Die Strommessvorrichtung ist mittels des Shunt-Widerstands besonders einfach, mit hoher Genauigkeit und in dem benötigten Messwertbereich ausführbar.

Vorzugsweise ist die Steuer- und / oder Regelvorrichtung unter Verwendung eines Digitalrechners implementiert.

Mittels eines Digitalrechners sind auch komplexe Steuer- und / oder Regelverfahren einfach und kostengünstig umsetzbar. Insbesondere der apparative Aufwand ist dann besonders gering. Weiterhin kann ein solcher Digitalrechner auch für andere Aufgaben genutzt werden, wie z.B. die Berechnung des durch die erste und / oder die zweite Magnetspule fließenden Strom aus dem gemessenen Summenstrom.

Vorteilhafter Weise ist die Bestimmung des jeweiligen durch die erste Magnetspule und / oder die zweite Magnetspule fließenden Stroms mittels eines mittels der Steuer- und / oder Regelvorrichtung abgebildeten Models des Ventilsystems durchführbar.

Auf diese Weise ist die Genauigkeit der Bestimmung der aktuell durch die beiden Magnetspulen fließenden Ströme weiter verbesserbar. Je genauer die Realität mittels des Models abgebildet wird, desto genauer ist demzufolge auch die Bestimmung der aktuell durch die beiden Magnetspulen fließenden Ströme. Ein derartig genutztes Model des Ventilsystems wird in der Regelungstechnik auch als Online-Simulation des Ventilsystems oder als Beobachter des Ventilsystems bezeichnet.

In einer weiteren Ausführungsform des Ventilsystems weist die Steuer- und / oder Regelvorrichtung zur Bestromung der beiden Magnetspulen eine dynamische Vorsteuerung mit Trajektorienplanung in Kombination mit einer Regelung auf.

Auf diese Weise kann die Positionierung des Stellglieds weiter präzisiert werden. Eine neue Soll-Position des Stellglieds ist in besonders kurzer Zeit erreichbar. Weiterhin sind etwaige Abweichungen von der Soll-Position des Stellglieds in besonders kurzer Zeit auf ein Minimum reduzierbar. Bei der dynamischen Vorsteuerung wird die Trajektorienplanung im laufenden Betrieb des Ventilsystems angepasst. Durch die dynamische Vorsteuerung mit Trajektorienplanung ist die Regelung weniger komplex ausführbar.

Weiter bevorzugt weist die Steuer- und / oder Regelvorrichtung dann einen PI- oder einen PID-Regler zur Durchführung der Regelung auf.

Solche PI- oder PID-Regler sind einfach herstellbar oder im Falle der Ausbildung des Reglers mittels des Digitalrechners einfach programmierbar.

Die dynamische Vorsteuerung mit Trajektorienplanung erfolgt in einer weiteren Ausführungsform des Ventilsystems gemäß einem Modell der differentiellen Flachheit.

Durch die Verwendung des Modells der differentiellen Flachheit ist die Vorsteuerung besonders einfach ausführbar. Mittels der differentiellen Flachheit werden Nichtlinearitäten auf eine exakte Art und Weise linearisiert.

Vorteilhafterweise sind die beiden Magnetspulen jeweils mittels eines Pulsweitenmodulations-Generators zur Erzeugung einer Pulsweitenmodulation bestrombar.

Bei der Pulsweitenmodulation wird zur Erzeugung eines mittleren Stromwertes ein entsprechend höherer Strom bzw. eine zugehörige Spannung mit einer Schaltfrequenz alternierend für jeweils eine bestimmte Zeitdauer ein- und dann wieder ausgeschaltet. Diese Schaltfrequenz kann beispielsweise 20 kHz betragen. Diese Frequenz ist so hoch, dass das Stellglied aufgrund seiner Massenträgheit auf diese Anregung im Wesentlichen nicht reagiert und damit so reagiert, als ob ein über die Zeit konstanter Strom durch die zugehörige Magnetspule fließen würde.

In einer weiteren, bevorzugten Ausführungsform des Ventilsystems sind die beiden Magnetspulen jeweils mittels eines Dither-Generators zur Erzeugung eines Ditherings bestrombar.

Durch das Dithering wird das Stellglied ständig in Bewegung gehalten, so dass zwischen Stellglied und umgebendem Gehäuse immer ein Schmierfilm erhalten bleibt. Eine Haftreibung und daraus folgende Stick-Slip-Effekte, welche zu unkontrollierbaren Bewegungen des Stellglieds und welche somit das Regelverhalten des Stellglieds nachteilig beeinflussen würden, sind erfolgreich vermieden. Die sogenannten Mikroschwingungen des Stellgliedes sind dabei so klein, dass sie die für die eigentliche Funktion des Stellgliedes, wie z.B. die Freigabe von bestimmten Strömungsquerschnitten, relevante Position des Stellgliedes im Wesentlichen nicht beeinflussen. Die Dither-Frequenz ist dabei mit beispielsweise 140 Hz derart niedrig, so dass das Stellglied die gewünschten Mikroschwingungen ausführen kann.

Zusammenfassend ist ein solches Ventilsystem zu vielfältigen Anwendungen geeignet, wie z.B. in einer derartigen Anwendung, in welcher das Wegeventil als Vorsteuerventil eines übergeordneten Steuerschiebers ausgeführt ist.

### Kurzbeschreibung der Figuren

Im Nachfolgenden werden bevorzugte Ausführungsformen unter Bezugnahme auf die anliegenden Figuren näher dargestellt.
Fig. 1 zeigt ein Ventilsystem nach einer bevorzugten Ausführungsform der Erfindung.
Fig. 2 zeigt ein Ersatzschaltbild für die Strommessvorrichtung aus Fig.1.
Fig. 3 zeigt das Ventilsystem aus Fig.1 mit einem übergeordneten Steuerschieber.

### Beschreibung bevorzugter Ausführungsbeispiele

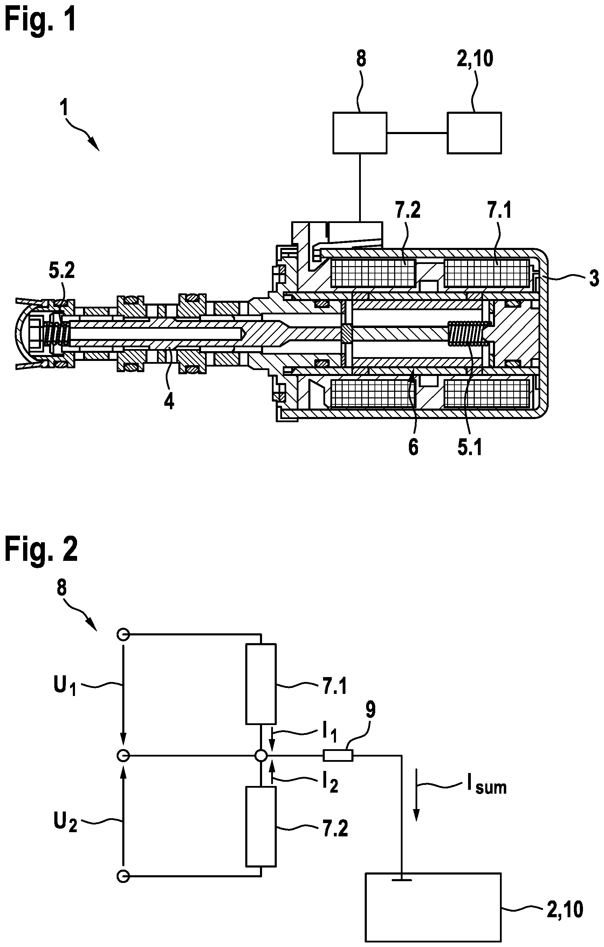

Fig. 1 zeigt ein Ventilsystem 1 mit u.a. zumindest einer Steuer- und / oder Regelvorrichtung 2 und zumindest einem elektrisch ansteuerbaren Wegeventil 3 mit einem Stellglied 4. Das Stellglied 4 ist mittels zumindest einer Feder 5.1, 5.2 in einer Konstruktionslage 6, vorzugsweise in einer Mittelstellung gehalten und das Stellglied 4 ist mittels in gegensinniger Richtung auf das Stellglied 4 wirkender erster und zweiter Magnetspulen 7.1, 7.2 durch die Steuer- und / oder Regelvorrichtung 2 verstellbar.

Gemäß der Darstellung aus Fig.1 ist das Stellglied 4 mittels der Magnetspule 7.1 mit einer nach links wirkenden Kraft und mittels der zweiten Magnetspule 7.2 mit einer nach rechts wirkenden Kraft beaufschlagbar. Dazu werden die beiden Magnetspulen 7.1, 7.2 mittels der Steuer- und / oder Regelvorrichtung 2 entsprechend bestromt, welche dazu eine entsprechende Elektronik aufweist. Dabei wird insbesondere die Art und Weise dieser Bestromung mittels der Steuer- und / oder Regelvorrichtung 2 zunächst ermittelt bzw. berechnet.

Gemäß Fig.1 sind zwei Federn 5.1, 5.2 auf einander gegenüberliegenden Seiten des Stellgliedes 4 angeordnet, um das Stellglied 4 in der Konstruktionslage 6 zu halten. Denkbar wäre demgegenüber auch der Einsatz von nur einer Feder.

Eine einzige Strommessvorrichtung 8 ist dafür vorgesehen und ausgebildet, einen durch die beiden Magnetspulen 7.1, 7.2 fließenden Summenstrom Iₛᵤₘ zu messen. Die Steuer- und/oder Regelvorrichtung 2 ist dafür vorgesehen und ausgebildet, aus dem gemessenen Summenstrom Iₛᵤₘ einen durch die erste Magnetspule 7.1 fließenden Strom I₁ und / oder einen durch die zweite Magnetspule 7.2 fließenden Strom I₂ zu berechnen.

Diese beiden durch die Magnetspulen 7.1, 7.2 fließenden Ströme I₁, I₂ sind für die Steuerung und / oder Regelung des Ventilsystems 1 wichtige Größen.

Beide Magnetspulen 7.1, 7.2 sind mittels der Steuer- und / oder Regelvorrichtung 2 gleichzeitig bestrombar, um das Stellglied 4 in einem Bereich angrenzend zur Konstruktionslage 6, vorzugsweise zur Mittelstellung zu verstellen oder in einer bestimmten Position in diesem Bereich zu halten.

Insgesamt ergeben sich somit verschiedene Betriebssituationen der Magnetspulen 7.1, 7.2. Entweder ist nur eine der beiden Magnetspulen 7.1, 7.2 bestromt, oder beide Magnetspulen 7.1, 7.2 sind bestromt. Wenn beide Magnetspulen 7.1, 7.2 bestromt sind, ist auch ein Verhältnis der beiden Bestromungen zueinander und insbesondere die Änderung eines solches Verhältnisses einstellbar.

Die Strommessvorrichtung 8 weist zur Messung des Summenstroms Iₛᵤₘ einen Shunt-Widerstand 9 auf. Es ist zur Ausbildung der einzigen Strommessvorrichtung 8 entsprechend nur ein einziger Shunt-Widerstand 9 vorgesehen. Der Shunt-Widerstand 9 sowie die durch die Magnetspulen 7.1, 7.2 fließenden Ströme I₁, I₂ und an den Magnetspulen 7.1, 7.2 anliegende Spannungen U₁, U₂ sind insbesondere aus dem Ersatzschaltbild für die Strommessvorrichtung 8 aus Fig.2 ersichtlich.

Die Steuer- und / oder Regelvorrichtung 2 ist unter Verwendung eines Digitalrechners 10 implementiert. Mittels des Digitalrechners 10 sind entsprechende Steuerungs- und / oder Regelungsalgorithmen ausführbar. Die Steuer- und / oder Regelvorrichtung 2, insbesondere der Digitalrechner 10, weist u.a. notwendige Ein- und Ausgänge, wie z.B. einen Eingang für die Messwerte der Strommessvorrichtung 8, auf. Ein solcher Digitalrechners 10 könnte zum Beispiel weiterhin einen Mikrocontroller aufweisen.

Die Bestimmung des jeweiligen durch die erste Magnetspule 7.1 und / oder die zweite Magnetspule 7.2 fließenden Stroms I₁, I₂ ist mittels eines mittels der Steuer- und / oder Regelvorrichtung 2 abgebildeten Models des Ventilsystems 1 durchführbar.

Dieses Model liegt insbesondere als Software in der Steuer- und / oder Regelvorrichtung 2 vor. Mittels dieses Models und weiterhin einer in dem Model berücksichtigten Betriebssituationen des Ventilsystems 1 sind dann die durch die erste Magnetspule 7.1 und / oder die zweite Magnetspule 7.2 fließenden Ströme I₁, I₂ aus dem gemessenen Summenstrom Iₛᵤₘ bestimmbar. Zur Berücksichtigung der Betriebssituation bzw. zur Ermittlung der gerade vorliegenden Betriebssituation des Ventilsystems 1 weist das Model eine entsprechende Logik bzw. entsprechende Abfragen der Ist-Situation auf.

Die Steuer- und / oder Regelvorrichtung 2 weist zur Bestromung der beiden Magnetspulen 7.1, 7.2 eine dynamische Vorsteuerung mit Trajektorienplanung in Kombination mit einer Regelung auf. Die Steuer- und / oder Regelvorrichtung 2 weist einen PI- oder einen PID-Regler zur Durchführung der Regelung auf. Die dynamische Vorsteuerung mit Trajektorieplanung erfolgt gemäß einem Modell der differentiellen Flachheit.

Während der Trajektorieplanung wird eine Soll-Trajektorie für den Strom zur Bestromung der beiden Magnetspulen 7.1, 7.2 mittels eines Zustandsvariablenfilters geplant bzw. eingestellt. Das Zustandsvariablenfilter wird zum Beispiel mittels eines Lag-Elements der Ordnung 1, also eines sog. PT1-Elements, ausgeführt. Zur Berücksichtigung von Begrenzungen, z.B. Stellgrößenbegrenzungen, wird das Filter weiterhin als schaltendes Zustandsvariablenfilter ausgeführt.

Die beiden Magnetspulen 7.1, 7.2 sind jeweils mittels eines Pulsweitenmodulations-Generators zur Erzeugung einer Pulsweitenmodulation bestrombar. Der Pulsweitenmodulations-Generator umfasst vorzugsweise eine Schaltvorrichtung, mit welcher eine im Wesentlichen kontante Versorgungsspannung an der betreffenden Magnetspule 7.1, 7.2 für bestimmte Zeitintervalle ein- und ausschaltbar ist, um einen mittleren Stromwert zu erzeugen.

Die beiden Magnetspulen 7.1, 7.2 sind jeweils mittels eines Dither-Generators zur Erzeugung eines Ditherings bestrombar. Aufgrund dieses Ditherings führt das Stellglied 4 im Betrieb Mikroschwingungen aus, um konstante Reibbedingungen in der Lagerung des Stellgliedes 4 zu erreichen. Diese Mikroschwingungen sind dabei so klein, dass sie die Funktion des Stellgliedes 4 bis auf die genannte Verbesserung der Lagerungseigenschaften im Wesentlichen nicht beeinflussen.

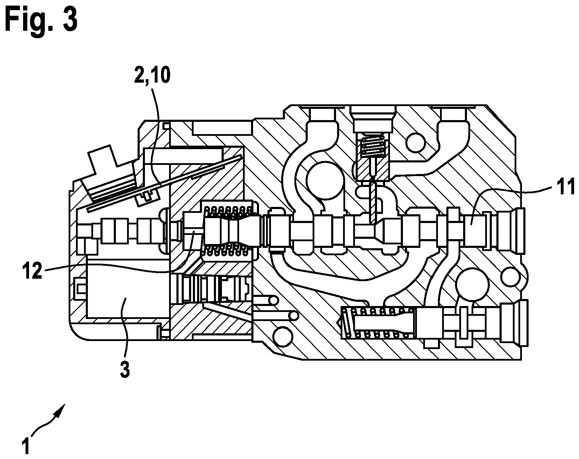

In Fig. 3 ist das Ventilsystem 1 mit einem übergeordneten Steuerschieber 11 dargestellt. Die Ansteuerung des Steuerschiebers 11 erfolgt über das Ventilsystem 1 mit dem elektrisch ansteuerbaren Wegeventil 3, welches insbesondere als ein 4/3-Wege-Vorsteuerventil ausgeführt ist. Das Wegeventil 3 beaufschlagt zur Auslenkung des Steuerschiebers 11 Stellräume des Steuerschiebers 11 mit Druck. Der Steuerschieberweg wird mittels eines Wegaufnehmers 12 an die Steuer- und / oder Regelvorrichtung 2 zurückgeführt. Die Steuer- und / oder Regelvorrichtung 2 regelt dann über die Bestromung des Wegeventils 3 die Position des Steuerschiebers 11 abhängig vom Sollwert der Steuerschieberauslenkung. Somit ist an Verbraucheranschlüssen ein geforderter Volumenstrom zum Betrieb angeschlossener Arbeitsgeräte einstellbar. Die Steuer- und / oder Regelvorrichtung 2 ist in Form eines Digitalrechners 10 auf einer Platine des Ventilsystems 1 angeordnet. Auf der Platine können weitere notwenige Elektroniken und Auswerteeinheiten zur Steuerung und / oder Regelung des Ventilsystems 1 angeordnet werden.

### Bezugszeichenliste

- 1: Ventilsystem
- 2: Steuer- und / oder Regelvorrichtung
- 3: elektrisch ansteuerbares Wegeventil
- 4: Stellglied
- 5.1: erste Feder
- 5.2: zweite Feder
- 6: Konstruktionslage
- 7.1: erste Magnetspule
- 7.2: zweite Magnetspule
- 8: Strommessvorrichtung
- 9: Shunt-Widerstand
- 10: Digitalrechner
- 11: Steuerschieber
- 12: Wegaufnehmer

- Iₛᵤₘ: Summenstrom
- I₁: durch die erste Magnetspule 7.1 fließender Strom
- I₂: durch die zweite Magnetspule 7.2 fließender Strom
- U₁: an der ersten Magnetspule 7.1 anliegende Spannung
- U₂: an der zweiten Magnetspule 7.2 anliegende Spannung

## Patentansprüche

1. Ventilsystem (1) mit zumindest einer Steuer- und / oder Regelvorrichtung (2) und zumindest einem elektrisch ansteuerbaren Wegeventil (3) mit einem Stellglied (4), welches mittels zumindest einer Feder (5.1, 5.2) in einer Konstruktionslage (6), vorzugsweise in einer Mittelstellung gehalten ist und welches mittels in gegensinniger Richtung auf das Stellglied (4) wirkender erster und zweiter Magnetspulen (7.1, 7.2) durch die Steuer- und / oder Regelvorrichtung (2) verstellbar ist, **gekennzeichnet durch** eine einzige Strommessvorrichtung (8), die dafür vorgesehen und ausgebildet ist, einen durch die beiden Magnetspulen (7.1, 7.2) fließenden Summenstrom (Iₛᵤₘ) zu messen, wobei die Steuer- und/oder Regelvorrichtung (2) dafür vorgesehen und ausgebildet ist, aus dem gemessenen Summenstrom (Iₛᵤₘ) einen durch die erste Magnetspule (7.1) fließenden Strom (I₁) und / oder einen durch die zweite Magnetspule (7.2) fließenden Strom (I₂) zu berechnen.

2. Ventilsystem (1) nach Anspruch 1, **dadurch gekennzeichnet, dass** beide Magnetspulen (7.1, 7.2) mittels der Steuer- und / oder Regelvorrichtung (2) gleichzeitig bestrombar sind, um das Stellglied (4) in einem Bereich angrenzend zur Konstruktionslage (6), vorzugsweise zur Mittelstellung zu verstellen oder in einer bestimmten Position in diesem Bereich zu halten.

3. Ventilsystem (1) nach Anspruch 1 oder 2, **dadurch gekennzeichnet, dass** die Strommessvorrichtung (8) zur Messung des Summenstroms (Iₛᵤₘ) einen Shunt-Widerstand (9) aufweist.

4. Ventilsystem (1) nach einem der vorangehenden Ansprüche, **dadurch gekennzeichnet, dass** die Steuer- und / oder Regelvorrichtung (2) unter Verwendung eines Digitalrechners (10) implementiert ist.

5. Ventilsystem (1) nach einem der vorangehenden Ansprüche, **dadurch gekennzeichnet, dass** die Bestimmung des jeweiligen durch die erste Magnetspule (7.1) und / oder die zweite Magnetspule (7.2) fließenden Stroms (I₁, I₂) mittels eines mittels der Steuer- und / oder Regelvorrichtung (2) abgebildeten Models des Ventilsystems (1) durchführbar ist.

6. Ventilsystem (1) nach einem der vorangehenden Ansprüche, **dadurch gekennzeichnet, dass** die Steuer- und / oder Regelvorrichtung (2) zur Bestromung der beiden Magnetspulen (7.1, 7.2) eine dynamische Vorsteuerung mit Trajektorienplanung in Kombination mit einer Regelung aufweist.

7. Ventilsystem (1) nach Anspruch 6, **dadurch gekennzeichnet, dass** die Steuer- und / oder Regelvorrichtung (2) einen PI- oder einen PID-Regler zur Durchführung der Regelung aufweist.

8. Ventilsystem (1) nach Anspruch 6 oder 7, **dadurch gekennzeichnet, dass** die dynamische Vorsteuerung mit Trajektorienplanung gemäß einem Modell der differentiellen Flachheit erfolgt.

9. Ventilsystem (1) nach einem der vorangehenden Ansprüche, **dadurch gekennzeichnet, dass** die beiden Magnetspulen (7.1, 7.2) jeweils mittels eines Pulsweitenmodulations-Generators zur Erzeugung einer Pulsweitenmodulation bestrombar sind.

10. Ventilsystem (1) nach einem der vorangehenden Ansprüche, **dadurch gekennzeichnet, dass** die beiden Magnetspulen (7.1, 7.2) jeweils mittels eines Dither-Generators zur Erzeugung eines Ditherings bestrombar sind.

## Claims

1. Valve system (1) having at least one open-loop and/or closed-loop control device (2) and at least one electrically actuatable directional valve (3) having an actuator (4), which is held by means of at least one spring (5.1, 5.2) in a construction location (6), preferably in a central position, and which can be moved by way of the open-loop and/or closed-loop control device (2) by means of first and second solenoid coils (7.1, 7.2) acting in the opposite direction on the actuator (4), **characterized by** a single current measuring device (8) which is provided and designed to measure a total current (Iₛᵤₘ) flowing through the two solenoid coils (7.1, 7.2), wherein the open-loop and/or closed-loop control device (2) is provided and designed to calculate from the measured total current (Iₛᵤₘ) a current (I₁) flowing through the first solenoid coil (7.1) and/or a current (I₂) flowing through the second solenoid coil (7.2).

2. Valve system (1) according to Claim 1, **characterized in that** both solenoid coils (7.1, 7.2) can be energized simultaneously by means of the open-loop and/or closed-loop control device (2) in order to move the actuator (4) in an area adjacent to the construction location (6), preferably to move said actuator to the central position or to hold it in a certain position in this area.

3. Valve system (1) according to Claim 1 or 2, **characterized in that** the current measuring device (8) for measuring the total current (Iₛᵤₘ) comprises a shunt resistor (9).

4. Valve system (1) according to any one of the preceding claims, **characterized in that** the open-loop and/or closed-loop control device (2) is implemented using a digital computer (10).

5. Valve system (1) according to any one of the preceding claims, **characterized in that** the respective current (I₁, I₂) flowing through the first solenoid coil (7.1) and/or the second solenoid coil (7.2) can be determined by means of a model of the valve system (1) which is mapped by means of the open-loop and/or closed-loop control device (2).

6. Valve system (1) according to any one of the preceding claims, **characterized in that**, to energize the two solenoid coils (7.1, 7.2), the open-loop and/or closed-loop control device (2) comprises dynamic feed-forward control with trajectory planning in combination with closed-loop control.

7. Valve system (1) according to Claim 6, **characterized in that** the open-loop and/or closed-loop control device (2) comprises a PI or a PID controller for carrying out the closed-loop control.

8. Valve system (1) according to Claim 6 or 7, **characterized in that** the dynamic feed-forward control with trajectory planning is carried out according to a differential flatness model.

9. Valve system (1) according to any one of the preceding claims, **characterized in that** the two solenoid coils (7.1, 7.2) can each be energized by means of a pulse-width-modulation generator for generating a pulse width modulation.

10. Valve system (1) according to any one of the preceding claims, **characterized in that** the two solenoid coils (7.1, 7.2) can each be energized by means of a dither generator for generating a dither.

## Revendications

1. Système de soupape (1), comprenant au moins un dispositif de commande et/ou de régulation (2) et au moins un distributeur (3) à pilotage électrique, pourvu d'un actionneur (4) qui est maintenu au moyen d'au moins un ressort (5.1, 5.2) dans une position de construction (6), de préférence dans une position centrale, et qui est réglable par le dispositif de commande et/ou de régulation (2) au moyen d'une première et d'une deuxième bobine magnétique (7.1, 7.2) agissant sur l'actionneur (4) dans des directions mutuellement opposées, **caractérisé par** un seul dispositif de mesure de courant (8) qui est prévu et réalisé pour mesurer un courant cumulé (Iₛᵤₘ) circulant à travers les deux bobines magnétiques (7.1, 7.2), dans lequel le dispositif de commande et/ou de régulation (2) est prévu et réalisé pour calculer à partir du courant cumulé (Iₛᵤₘ) un courant (I₁) circulant à travers la première bobine magnétique (7.1) et/ou un courant (I₂) circulant à travers la deuxième bobine magnétique (7.2).

2. Système de soupape (1) selon la revendication 1, **caractérisé en ce que** les deux bobines magnétiques (7.1, 7.2) peuvent être alimentées en courant en même temps au moyen du dispositif de commande et/ou de régulation (2) pour régler l'actionneur (4) dans une plage adjacente à la position de construction (6), de préférence vers la position centrale, ou pour le maintenir dans une position déterminée dans cette plage.

3. Système de soupape (1) selon la revendication 1 ou 2, **caractérisé en ce que** le dispositif de mesure de courant (8) présente une résistance shunt (9) pour mesurer le courant cumulé (Iₛᵤₘ).

4. Système de soupape (1) selon l'une quelconque des revendications précédentes, **caractérisé en ce que** le dispositif de commande et/ou de régulation (2) est mis en oeuvre en utilisant un ordinateur numérique (10).

5. Système de soupape (1) selon l'une quelconque des revendications précédentes, **caractérisé en ce que** la détermination du courant (I₁, I₂) respectif circulant à travers la première bobine magnétique (7.1) et/ou la deuxième bobine magnétique (7.2) peut être effectuée au moyen d'un modèle du système de soupape (1) reproduit au moyen du dispositif de commande et/ou de régulation (2).

6. Système de soupape (1) selon l'une quelconque des revendications précédentes, **caractérisé en ce que** le dispositif de commande et/ou de régulation (2) présente une commande pilote dynamique à planification de trajectoire en combinaison avec une régulation pour alimenter en courant les deux bobines magnétiques (7.1, 7.2).

7. Système de soupape (1) selon la revendication 6, **caractérisé en ce que** le dispositif de commande et/ou de régulation (2) présente un régulateur PI ou PID pour effectuer la régulation.

8. Système de soupape (1) selon la revendication 6 ou 7, **caractérisé en ce que** la commande pilote dynamique à planification de trajectoire est effectuée selon un modèle de la planéité différentielle.

9. Système de soupape (1) selon l'une quelconque des revendications précédentes, **caractérisé en ce que** les deux bobines magnétiques (7.1, 7.2) peuvent être alimentées en courant respectivement au moyen d'un générateur de modulation d'impulsions en largeur.

10. Système de soupape (1) selon l'une quelconque des revendications précédentes, **caractérisé en ce que** les deux bobines magnétiques (7.1, 7.2) peuvent être alimentées en courant respectivement au moyen d'un générateur de dither pour générer un dithering.
